# EUROPEAN PATENT APPLICATION

(11) **EP 0 899 245 A1**
(43) Date of publication of application: **03.03.1999**
(21) Application number: 97946118.3
(22) Date of filing: 05.12.1997
(51) Int. Cl.: C03C 27/12

(54) **PROCESS FOR THE PRODUCTION OF LAMINATED GLASS**

(30) Priority: 13.01.1997 JP 3744/97
(71) Applicant: NIPPON SHEET GLASS CO., LTD., Osaka-shi, Osaka 541 (JP)
(72) Inventor: TANAKA, Hirokazu Nippon Sheet Glass Co., Ltd., Osaka 541 (JP); SATO, Ryozo Nippon Sheet Glass Co., Ltd., Osaka 541 (JP); MIYA, Koji Nippon Sheet Glass Co., Ltd., Osaka 541 (JP)
(74) Representative: Driver, Virginia Rozanne
(86) International application number: JP9704461
(87) International publication number: WO9830511

(57) **Abstract**

Laminated glass is prepared for high quality dimmer glass having uniform bonding without local stress. Glass plates (3A, 3B) and a dimmer film (1) are laminated with interlayers (2A, 2B) therebetween to make a laminated body (4), and the laminated body (4) is heated by immersing it into hot liquid. The interlayers (2A, 2B) are of modified ethylene-vinyl acetate copolymer interlayers having the gradient of a temperature/viscosity line from -0.0097 to -0.01188 °C⁻¹ in a range between 90 and 130 °C in a graph where the temperature is plotted as the abscissa and the common logarithm of the viscosity is plotted as the ordinate.

## Description

### Field of the invention

The present invention relates to a method for preparing laminated glass, and more particularly, to a method suitable for preparing dimmer glass comprising two glass plates and a dimmer film which is interposed therebetween and integrally bonded to them.

### Background of the invention

Dimmer glass comprises two glass plates and a dimmer film (e.g. UMU (registered trademark) film available from NIPPON SHEET GLASS CO., LTD). The dimmer film consists of polyethylene films with transparent conductive layers thereon and dimmer material such as liquid crystal interposed between the films. The glass plates and the dimmer film therebetween are integrated by bonding to become the dimmer glass.

The conventional dimmer film has polyvinylbutyral (PVB) films on the both surfaces thereof for bonding the dimmer film to the glass plates. The laminated body glass plates and the dimmer film are held in a vacuum bag, preheated at about 100 °C, and bonded by heating and pressing them in an autoclave at, for example, 7kg/cm² and 105 °C.

Normal laminated glass such as ornamental laminated glass has sometimes an interlayer made of modified ethylene-vinyl acetate copolymer (modified EVA) of non-plastic type which requires no autoclave process for bonding the interlayer to the glass plates. Japanese patent publication JPB 2-11541 discloses a method for preparing laminated glass comprising steps of interposing a modified EVA interlayer between two glass plates, entering them into a vacuum bag, and heating them by immersing them into hot water. JPA 5-286742 describes a preparing method of laminated glass comprising a modified EVA interlaing film wherein an improved spacer is disposed in a vacuum bag so as not to bring distortion.

The PVB interlayer used in preparation of the conventional dimmer glass requires the autoclave process, which increases costs of an apparatus for preparing the dimmer glass. The PVB contains plasticizer which may migrate into a dimmer layer of the dimmer glass so as to deteriorate the inside of the dimmer layer, and the four edges of the dimmer film must be sealed with protection tape in order to prevent the plasticizer from migrating into the dimmer layer.

The modified EVA interlayer used in the normal laminated glass is prepared without autoclaving, and contains no plasticizer thereby avoiding problems caused by the plasticizer. However, there are drawbacks with the modified EVA interlayer as follows.

The modified EVA has characteristics that it is normally hard as compared with PVB at the ordinary temperature, and that an increase in the temperature in the range between the ordinary temperature and 100 °C reduces rapidly the viscosity thereof (i.e. characteristics of steep viscosity-temperature gradient). Accordingly when the EVA interlayer is heated ununiformly during pressurizing and heating-up process, the interlayer becomes hard at a slowly heated portion in comparison with the other rapidly heated portion. As a result of this, local stress is developed at a hard portion of the interlayer. The dimmer film is weak against the local stress from an external environment. When the interposed dimmer material is made of liquid crystal, in particular, a slight distortion caused by the stress may significantly change the optical characteristics. For example, in the preparation of dimmer glass comprising the UMU film when the interlayer is of the modified EVA and the heating and bonding process is carried in a normal vacuum heating furnace, unevenness in shielding of the dimmer glass may be tangible due to ununiformity in temperature, thereby causing the visual defect (transparentized partially) as a result.

The conventional interlayer of the dimmer glass is accordingly not of EVA but of PVB, whereby the method for preparing the dimmer glass requires autoclaving and the dimmer film is sealed at its circumferential edge.

### Disclosure of the Invention

It is an object of the present invention to provide a method for preparing high quality laminated glass having a modified EVA interlayer without autoclaving, and the laminated glass being bonded uniformly without local stress.

According to a method of the present invention laminated glass is prepared by interposing a resin film between a plurality of glass plates and integrally bonding them. The glass plates and the resin film with interlayers interposed between the glass plates and said resin film are laminated, and then heated by immersing it into hot liquid. The interlayers are made of modified ethylene-vinyl acetate copolymer interlayers of which the gradient of a temperature/viscosity line is from -0.0097 to -0.01188 °C⁻¹ in a range between 90 and 130 °C, wherein the temperature (°C) is plotted as the abscissa and the common logarithm of the viscosity (poise) ρ is plotted as the ordinate.

In the present invention, the modified EVA interlayers having the gradient of a temperature/viscosity line lower than that of the one used conventionally has a small rate of variation in hardness to temperature. A laminated body is heated uniformly and pressed uniformly by being by immersed in liquid. A development of local stress can be accordingly minimized, thereby providing a good bonding in the present invention. It is preferable that the 5% elastic modulus of this modified ethylene-vinyl acetate copolymer interlayers is from 5.4 to 8.0 kg/cm^{2.}°C.

It should be noted that a modified EVA conventionally used as interlayers for a typical laminated glass has the gradient of a temperature/viscosity line of about - 0.0131 °C⁻¹, the 5% elastic modulus of 12.7 kg/cm^{2.}°C, and large variation in hardness to temperature, thereby easily developing local stress.

The method of the present invention is effectively applied to preparation of dimmer glass using a dimmer film which is weak against the local stress.

### Brief Description of Drawings

Fig. 1a, Fig. 1b and Fig. 1c are sectional views illustrating a method for preparing dimmer glass according to an embodiment of the present invention.
Fig. 2 is a graph showing temperature-viscosity lines of modified EVA each used in an example and a comparative example wherein the temperature is plotted as the abscissa and the common logarithm of the viscosity (poise) ρ is plotted as the ordinate.

### Preferred embodiments of the invention

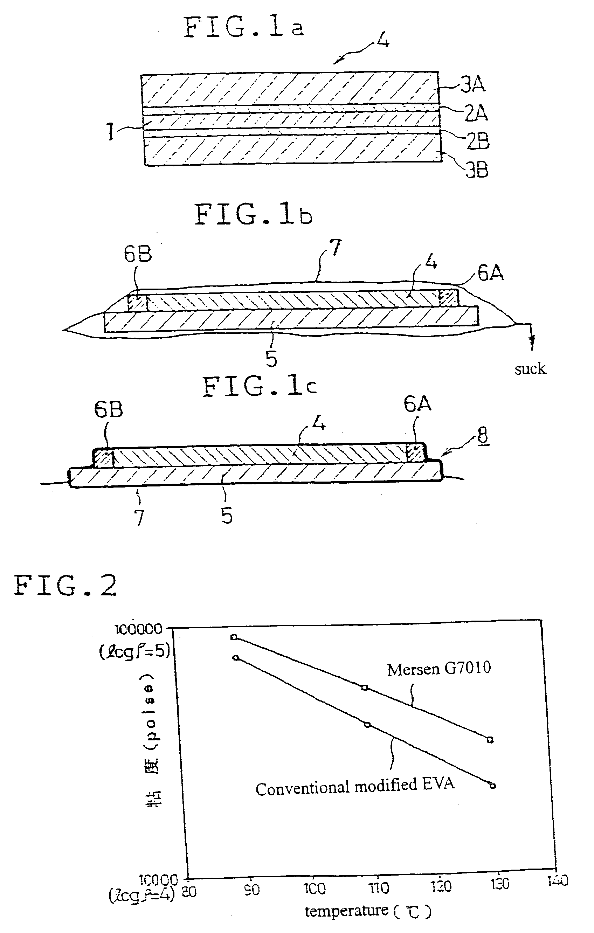

In the method of the present invention, as shown in Fig. 1a, interlayers 2A, 2B are attached to the both surfaces of a dimmer film 1, and the dimmer film 1 is interposed between glass plates 3A, 3B to make a laminated body 4. As shown in Fig. 1b, the laminated body 4 is placed on a base plate 5 and is entirely covered by a flexible sheet 7 in the state that square-bar-like spacers 6A, 6B are attached to all end faces of the laminated body 4. Then, the inside of the sheet 7 is sucked by a vacuum pump and is held for a predetermined period in the pressure reduction state so as to make a vacuum bag body 8 as shown in Fig. 1c.

Then, the vacuum bag body 8 is heated by immersing it into hot liquid such as hot water and, after that, is cooled by immersing it into cold liquid such as cold water so that the laminated body 4 bonds and is integrated. After that, the vacuum bag body 8 is opened to take out a dimmer glass.

In preparing the dimmer glass according to the present invention, a modified EVA interlayer is employed as the interlayer, of which the gradient of a temperature/viscosity line, in which the temperature (°C) is plotted as the abscissa (X-axis) and the common logarithm of the viscosity (poise) ρ is plotted as the ordinate (Y-axis), is from -0.0097 to -0.01188 °C⁻¹ in a range between 90 and 130 °C and of which the 5% elastic modulus is preferably from 5.4 to 8.0 kg/cm^{2.}°C. Examples of modified EVA interlayers having such a temperature/viscosity line and a 5% elastic modulus include, for example, Mersen G7010 (available from TOSOH Corporation, the gradient of a temperature/viscosity line is -0.0108 °C⁻¹, the 5% elastic modulus: 7.0 kg/cm^{2.}°C) and the like. The interlayer has preferably a thickness about 250 ∼ 400 µm for handling and bonding.

In case where the bonding is made with such an interlayer, it is preferable that the degree of pressure reduction to the vacuum bag body 8 is less than -700 mm Hg, particularly less than -730 mm Hg, for example between -730 and -740 mm Hg and that the vacuum bag body 8 is held for 5 to 30 minutes, preferably 5 to 15 minutes in this state. A heating temperature and a heating period depend on the material of the interlayers 2A, 2B and the thickness of the glass plates 3A, 3B. However, in case of using glass plates 3A, 3B having a thickness of 3 to 6 mm and interlayers 2A, 2B of Mersen G7010, it is preferable that the vacuum bag body 8 is immersed in a hot water tank kept at a fixed temperature between 90 and 100 °C for 5 to 20 minutes with the pressure reduction state being maintained and, after that, the vacuum bag body 8 is immersed in a cold water tank kept at a fixed temperature between 20 and 60 °C, preferably, between 20 and 50 °C for 1 to 10 minutes, more preferably 1 to 5 minutes. Thick glass plates having, for example, a thickness of about 10 mm can be bonded by being immersed in hot water for a sufficient time. By employing the hot water immersion heating and cold water immersion cooling as mentioned above, the resultant heating and cooling are significantly uniform as compared with a typical heating such as by circulating hot-air or a heater and the ununiformity of temperature is therefore little, thereby preventing local stress from developing on the dimmer film 1.

The flexible sheet 7 for the vacuum bag is easily elastically deformed by suction and is soft as allowing the uniform transmission of the pressure reduction inside the vacuum bag, but is not deteriorated by heat during the heating process so as to allow its re-use. Preferably the sheet has a thickness of 0.1 to 3 mm, more preferably 0.1 to 2 mm, and is made of a rubber sheet such as chloroprene rubber, neoprene rubber, and butyl rubber, a metal/ synthetic resin laminated film, and a synthetic resin/synthetic resin laminated film such as Al/nylon, Al/PET, polypropylene (PP)/6-nylon, PP/polyester may be employed.

The spacers 6A, 6B which are used for controlling the pressure to be applied keep its elasticity without deterioration by heat during the heating process and has preferably a shore hardness not more than 30, more preferably between 6 and 7. For example, chloroprene rubber, butyl rubber, silicone rubber, silicone foamed material, or a laminate thereof may be employed. The spacers 6A, 6B are preferably set in such that (T - D) is from 0 to 5 mm, particularly from 0 to 3 mm wherein T is the thickness of the spacers 6A, 6B attached to the all ends of the laminated body 4 and D is the thickness of the laminated body 4. The width of the spacers 6A, 6B is preferably from 5 to 15 mm, particularly from 7 to 13mm, more preferably about 10 mm.

Though the above description is made with regard to the method for preparing dimmer glass using the dimmer film as a resin film, the present invention is effectively applied to a case where the resin film is made of a material weak against the local stress from the external environment and other examples of the resin film to be interposed between the glass plates include a typical PET film such as hologram film, besides a dimmer film.

Normally used as the liquid for immersion process is water. However, other liquid such as oil may be used when the heating temperature for bonding exceeds 100 °C.

Instead of the immersion into cold water, the cooling after heating may be conducted by air-cooling. In this case, since the vacuum bag body 8 took out from the hot water is wet by the water, large cooling effect can be obtained by its latent heat of vaporization.

Hereinafter, the present invention will be described in detail by means of a specific example and a comparative example.

It should be noted that temperature/viscosity lines, in which the temperatures (°C) of Mersen G7010 used as the interlayer in Example 1 and modified EVA used as the interlayer in Comparative Example 1 are plotted as the abscissa (X-axis) and the common logarithms of the viscosity (poise) ρ are plotted as the ordinate (Y-axis), are shown in Fig. 2. Each gradient of the temperature/viscosity line in a range between 90 and 130 °C is as follows:
- Mersen G7010: -0.0108°C⁻¹;
- Conventional modified EVA: -0.0131°C⁻¹.

In addition, each 5% elastic modulus is as follows:
- Mersen G7010: 7.0 kg/cm^{2.}°C
- Conventional modified EVA: 12.7 kg/cm^{2.}°C

### Example 1

According to the method as shown in Fig. 1a, Fig. 1b and Fig. 1c, dimmer glass was prepared with using a dimmer film (UMU film).

The thickness of the glass plates 3A, 3B is 3 mm, Mersen G7010 (of 250 µm thickness) was employed as the interlayers 2A, 2B, and chloroprene rubber sheet (of 1mm thickness) was employed as the sheet 7. The spacers 6A, 6B are made of silicone rubber. The spacers 6A, 6B have a thickness of 10 mm and a width of 10 mm.

The vacuum bag body 8 was sucked until the inner pressure thereof reached -740 mm Hg and was kept in this state for 8 minutes. After that, it was immersed into hot water kept at a fixed temperature of 96 °C for 10 minutes and was then immersed into cold water kept at fixed temperature of 30 °C for 1 minute.

As a result of this, the resultant dimmer glass has an entirely unique opaque surface without causing the visual abnormality of partial transparence, that is, has quite good quality.

### Comparative Example 1

A dimmer glass was prepared in the same manner as Example 1, but the conventional modified EVA (of 250 µm thickness) was employed as the interlayers and the heating temperature is 95 °C.

As a result of this, the resultant dimmer glass has poor quality with partial transparence.

### Industrial Applicability

As described above, according to the method of the present invention, the high quality dimmer glass is produced by using the modified EVA interlayer, which eliminates the autoclave process and the problems caused by the plasticizer, and accomplishing the uniformity bonding without developing local stress. According to the present invention the dimmer glass is prepared without an autoclave process, thereby reducing the equipment costs, and no countermeasure against the problems with plasticizer is required. The dimmer glass is prepared with small number of processes, and thus quality dimmer glass can be prepared easily at a low cost.

## Claims

1. A method for preparing laminated glass by interposing a resin film between a plurality of glass plates and integrally bonding them,
wherein the method comprises a step of laminating said glass plates and said resin film with interlayers being interposed between said glass plates and said resin film to form a laminated body, and then heating the laminated body by immersing it into hot liquid, and
wherein said interlayers are made of modified ethylene-vinyl acetate copolymer interlayers having a gradient of a temperature/viscosity line from -0.0097 to -0.01188 °C⁻¹ in a range between 90 and 130 °C in a graph where the temperature (°C) is plotted as the abscissa and the common logarithm of the viscosity (poise) is plotted as the ordinate.

2. A method for preparing laminated glass as claimed in claim 1, wherein the 5% elastic modulus of said modified ethylene-vinyl acetate copolymer interlayers is from 5.4 to 8.0 kg/cm^{2.}°C.

3. A method for preparing laminated glass as claimed in claim 1 or 2, wherein said resin film is a dimmer film and the laminated glass is dimmer glass.

4. A method for preparing laminated glass as claimed in any one of claims 1 through 3, wherein the laminated body is covered by a flexible sheet and wherein the inside of the flexible sheet is sucked to make a vacuum bag body, the vacuum bag body is heated, then cooled, and is opened thereafter to take out the laminated glass.

5. A method for preparing laminated glass as claimed in claim 4, wherein said sheet is made of a rubber sheet, a synthetic resin sheet, and a laminated sheet composed of metal and synthetic resin.

6. A method for preparing laminated glass as claimed in claim 4 or 5, wherein the vacuum bag body is heated by immersing it into liquid at a temperature between 90 and 100 °C.

7. A method for preparing laminated glass as claimed in any one of claims 4 through 6, wherein the vacuum bag body is cooled by immersing it into cold liquid.

8. A method for preparing laminated glass as claimed in any one of claims 4 through 7, wherein the vacuum bag body is sucked such that the inner pressure thereof becomes less than -700 mm Hg.

9. A method for preparing laminated glass as claimed in any one of claims 4 through 8, wherein said laminated body is put on a base plate and wherein said base plate and said laminated body are covered by the flexible sheet.

10. A method for preparing laminated glass as claimed in claim 9, wherein spacers are attached to ends of the entire periphery of the laminated body on the base plate and wherein the laminated body, the base plate, and the spacers are covered together by the flexible sheet.

11. A method for preparing laminated glass as claimed in claim 10, wherein (T - D) is from 0 to 5 mm where T is the thickness of said spacers and D is the thickness of the laminated body.

12. A method for preparing laminated glass as claimed in any one of claims 1 through 11, wherein dimmer glass having an entirely unique opaque surface is produced.
